# EUROPEAN PATENT SPECIFICATION

(11) **EP 3 253 094 B1**
(45) Date of publication and mention of the grant of the patent: **17.03.2021**
(21) Application number: 16290094.8
(22) Date of filing: 30.05.2016
(51) Int. Cl.: H04W 8/26, H04L 29/12

(54) **METHOD, APPARATUS AND COMPUTER PROGRAM FOR PROVIDING A USER PLANE ADDRESS**
VERFAHREN, VORRICHTUNG UND COMPUTERPROGRAMM ZUR BEREITSTELLUNG EINER ADRESSE AUF BENUTZEREBENE
PROCÉDÉ, APPAREIL ET PROGRAMME INFORMATIQUE POUR FOURNIR UNE ADRESSE DE PLAN UTILISATEUR

(43) Date of publication of application: 06.12.2017
(73) Proprietor: Alcatel Lucent, 91620 Nozay (FR)
(72) Inventor: Gebert, Jens, 70435 Stuttgart (DE); Zeller, Dietrich, 70435 Stuttgart (DE)
(74) Representative: DREISS Patentanwälte PartG mbB

(56) References cited:
- US-A1- 2012 179 790
- US-A1- 2014 003 373
- US-A1- 2014 328 300
- US-A1- 2015 078 173
- "3rd Generation Partnership Project; Technical Specification Group Radio Access Network; Evolved Universal Terrestrial Radio Access (E-UTRA); Radio Resource Control (RRC); Protocol specification (Release 13)", 3GPP DRAFT; 36331-D10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 April 2016 (2016-04-01), XP051081790, Retrieved from the Internet: URL:http://www.3gpp.org/ftp/tsg_ran/WG2_RL 2/Specifications/201603_final_specs_after_ RAN_71/ [retrieved on 2016-04-01]

## Description

### Field of the invention

Embodiments relate to methods, apparatuses and computer programs for providing a user plane address.

### Background

This section introduces aspects that may be helpful in facilitating a better understanding of the invention(s). Accordingly, the statements of this section are to be read in this light and are not to be understood as admissions about what is in the prior art or what is not in the prior art.

US 2014/328300 A1 discloses a method, network element and terminal of achieving identity and location separation and interface identifier allocation. The method of achieving an identity and location separation network includes: an EPS network side network element acquiring an Access Identifier (AID) of a User Equipment (UE), and transmitting the acquired AID to the UE; a Packet Data Network Gateway (P-GW) to which the UE is attached allocating a subnet prefix for the UE, and transmitting the subnet prefix to the UE; and the UE combining into an IPv6 address using the AID as an interface identifier part of the IPv6 address and the subnet prefix as a subnet prefix part of the IPv6 address, and using the IPv6 address to configure the IPv6 address of the UE itself.

US 2015/0078173 A1 discloses a method and a network monitoring probe for tracking identifiers corresponding to a user device are provided. The probe monitors a source base station (BS) for receipt of at least a first control plane message comprising a first control plane identifier and a first user device identifier; the probe also monitors the source MME for receipt of a second control plane message comprising a second control plane identifier, a second and a third user device identifier; when the first and the second control plane identifiers are identical and the first and the second user device identifiers are identical, the first and third user device identifier are respectively stored or output as an identified first and second user device identifier of the user device, and it is determined that the user device commences a S1-based handover when the first control plane message is determined as a handover required message.

3GPP TS 36.331 V13.1.0 specifies the Radio Resource Control protocol for the radio interface between UE and E-UTRAN.

Demands for increasing the throughput of communication systems are steadily increasing. As connected devices, such as smartphones, computers, or streaming devices increase the amount of data transmitted due to a more widespread use and due to demand for more high quality services, a new category of devices is using an increasing share of the available bandwidth.

The Internet of Things (IoT), which predominantly relies on Machine-to-Machine (M2M) communication, connects formerly unconnected devices, such as thermostats, household appliances, bio monitors etc. to communication systems, e.g. mobile communication systems.

Machine-to-Machine communication, especially Massive Machine-to-Machine communication (MMC) may increase the number of devices participating in communication systems. As such appliances partaking in MMC may be located in remote areas or may be mobile, MMC may also use mobile communication systems, e.g. General Packet Radio Service (GPRS), Universal Mobile Telecommunications System (UMTS), Long Term Evolution (LTE) or 5^{th}-generation mobile communication systems (5G). As, in many cases, no high quality content might be exchanged in MMC, but sparse data, such as instructions, sensory readings etc., data packets sent in MMC may comprise a small size, compared with data packets sent or received by smart phones or streaming clients, which may result in a high overhead for establishing connections or bearers for transferring the data.

Mobile communication systems, e.g. LTE or 5G, may comprise a control plane, which is used to handle radio-specific administrative functionality, e.g. Radio Resource Control (RRC, the assignment of radio resources for transmission), or the paging of mobile transceivers (to determine their location/associated base station transceiver in the mobile communication system) and a user plane to handle the transfer of user data, e.g. Internet Protocol-packages or calls.

### Summary

The invention is set out in the independent claims. Further embodiments are set out in the dependent claims.

It is an object of the present invention to provide an improved method of providing a user plane address and apparatus for determining a user plane address for at least one mobile transceiver in a mobile communication system further comprising at least one mobile communication system infrastructure entity configured to communicate with the at least one mobile transceiver via a user plane communication channel, the mobile transceiver being controlled via a control plane communication channel and comprising one or more, preferably a plurality, of network interfaces. Regarding the abovementioned method, this objective is achieved by obtaining a control plane address for the at least one mobile transceiver, determining, for at least one of said network interfaces, a respective user plane address associated with said at least one network interface for the at least one mobile transceiver depending on said control plane address and a network interface identifier, NIID, characterizing said at least one network interface, and providing said user plane address. This advantageously enables to provide at least one user plane address for the mobile transceiver which is associated with a specific network interface of said mobile transceiver, thus enabling user plane based addressing even in cases with dual connectivity or multi connectivity where a mobile transceiver may be served by multiple base stations.

In other words, the principle according to the embodiments provides an efficient mapping of e.g. a UE (terminal) identifier characterizing a control plane address in combination with a further identifier, e.g. the NIID, to a user plane address. Preferably, said mapping is chosen such that it is reversible, i.e. from a user plane address obtained in accordance with the present embodiments, the corresponding control plane address and NIID may (again) be derived.

According to a preferred embodiment, said mobile transceiver comprises a first network interface and a second network interface, wherein said step of determining comprises: determining a first user plane address associated with said first network interface depending on said control plane address and a first NIID characterizing said first network interface, determining a second user plane address associated with said second network interface depending on said control plane address and a second NIID characterizing said second network interface.

According to an embodiment, the mobile transceiver may be connected via its first network interface to a first base station, and via its second network interface to a second base station. According to the principle of the embodiments, for each of said first and second network interfaces a specific (and preferably unique) user plane address may be provided, wherein packet streams being directed to the mobile transceiver via said first base station may employ the first user plane address, and wherein packet streams being directed to the mobile transceiver via said second base station may employ the second user plane address.

The principle according to the embodiments advantageously enables to efficiently provide user plane address(es) even in cases with dual- or multi-connectivity, wherein one mobile transceiver is served by two or more base stations via different network interfaces.

According to some embodiments, the above explained principle may be applied to a mobile transceiver having one network interface. However, according to further embodiments, said principle may also be applied to a mobile transceiver having two or even more than two network interfaces, wherein preferably a respective user plane address may be determined for one or more, preferably each of said network interfaces based on said principle.

Various embodiments relate to methods, apparatuses and computer programs for determining a user plane address. In at least some embodiments, to reduce an overhead of small transmissions which may result from M2M or MMC, embodiments may use a connection-less paradigm, e.g. embodiments might not establish a connection (bearer) between a mobile transceiver and e.g. the packet gateway, but may use packet-based routing within the mobile communication system. In mobile communication systems, a user plane and a control plane may be separated - the user plane may be used to transmit data, calls etc., to and from mobile transceivers of the mobile communication system, and the control plane may be used to coordinate and manage the mobile transceivers, e.g. their association with base station transceivers of the mobile communication system. The packet based routing may be based on user plane addresses (instead of the connections) to identify the mobile transceivers. Both planes may use different means of identification to distinguish the mobile transceivers, e.g. the International Mobile Subscriber Identity (IMSI) and the Temporary Mobile Subscriber Identity (TMSI) on the control plane, or, in conventional systems, dedicated connections or bearers for the user plane. Embodiments may support a connectionless paradigm for both user plane and control plane, e.g. embodiments may communicate via the control plane and via the user plane without establishing dedicated, mobile transceiver-specific connections first, e.g. based on a packet-switch paradigm. In conventional systems, to find out a control plane address from a user plane communication, the mobility management entity is involved to determine the control plane address, based on the dedicated connection or bearer of the user plane communication, causing a high communication overhead and load at the mobility management entity. This may for example be necessary when a packet or call arrives for a mobile transceiver, which is not actively connected to any base station transceiver, and must be located among the base station transceivers using paging, which requires the control plane address.

Embodiments provide a transformation between the user plane communication, which is based on a user plane address, and the control plane address. The transformation may be calculated locally, e.g. based on a reversible transformation instruction, without involving a database or separate entity, thus reducing an overhead in the core network of the mobile communication system. This may enable a local and latency-reduced determination of the control plane or user plane address, which may then be used to bridge the gap between the user plane and the control plane, e.g. for paging.

According to some embodiments, determining the user plane address associated with a specific network interface of a mobile transceiver may be performed based on a distinct transformation of information derived from the control plane address and said NIID (or based on a direct transformation of said control plane address and said NIID), which may enable a bridging between user plane and control plane without a requirement to lookup corresponding addresses in a database or control instance. This may decrease an overhead and delays, may enable user plane - control plane interaction at any point of a mobile communication system, and may enable a connectionless routing in a mobile communication system.

In at least some embodiments, the determining of at least one user plane address may be based on a reversible transformation of the control plane address and the NIID (or in the case of several user plane addresses, based on the control plane address and the respective NIID the corresponding user plane address is to be determined for). In various embodiments, the determining may be based on a bijective transformation of the control plane address and the NIID. In at least some embodiments, the determining may be based on a local transformation of the control plane address and the NIID. A reversible and/or bijective transformation may enable a transformation from control plane to user plane and vice versa, i.e., a control plane address or user plane address may be determined at any entity within the mobile communication system, and may be performed locally. This may further enable control plane - user plane bridging, e.g. if based on a static transformation rule. A local transformation may reduce a delay of the transformation and may enable a transformation without an involvement of additional entities, e.g. a Mobility Management Entity (MME) of the mobile communication system.

In various embodiments, the obtaining may further comprise determining the control plane address when the at least one mobile transceiver is associated with the at least one mobile communication system infrastructure entity. Determining the control plane address when the at least one mobile transceiver is associated with the at least one mobile communication system infrastructure entity may enable a distinct temporary control plane addressing of the at least one mobile transceiver, which may enable a distinct user plane addressing of the at least one mobile transceiver.

In various embodiments, the control plane address may correspond to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI. Using standardized formats for the control plane address may enable a wide adaptation of embodiments.

In at least some embodiments, the transformation may comprise using an affix and at least part of the control plane address and/or NIID. Using at least part of the control plane address and/or NIID may enable a low-complexity transformation between the user plane and the control plane. Using an affix may enable a transformation between address spaces having different address spaces or address space dimensions, and may enable an inclusion of additional information, which might e.g. be used for routing.

In at least some embodiments, the affix may comprise a fixed bit sequence. Alternatively or additionally, the affix may be related to the at least one mobile communication system infrastructure entity. A fixed bit sequence may facilitate a transformation and may enable an extension of a length of the user plane or control plane address. The affix being related to the at least one mobile communication system infrastructure entity may enable including further information, e.g. routing information, in the control plane or user plane address. An affix may e.g. correspond to a prefix and/or a suffix.

In at least some embodiments, the at least one mobile communication system entity may correspond to at least one element of the group of base station transceiver, serving gateway, packet gateway, mobility management entity and radio access network user plane anchor. Enabling control plane and user plane communication with a variety of entities may further reduce an overhead and/or delays in the mobile communication system.

According to a further embodiment, the NIID characterizes an identifier identifying a serving cell, particularly a primary or secondary cell. Preferably, the NIID characterizes a ServCellIndex parameter as defined by 3GPP TS 36.331 V13.1.0, 2016-03.

The ServCellIndex is a short identity used to identify a serving cell (i.e. the Primary Cell or a Secondary Cell). Value 0 applies for the Primary Cell (PCell), while the SCellIndex as also defined in 3GPP TS 36.331 V13.1.0, 2016-03 applies for Secondary Cells. The ServCellIndex is currently defined as INTEGER (0..31) and thus requires 5 bits, which, according to a further embodiment, may be extended to 6 bits.

According to a further embodiment, alternatively to the ServCellIndex, a Data Radio Bearer ID (DRB ID, as defined in 3GPP TS 36.331 V13.1.0, 2016-03) may be employed as network interface identifier, as the DRB ID is unique within the scope of the UE.

According to a further embodiment, the user plane address comprises a) a media access control, MAC, address, format, preferably a MAC address format of 48 bit length or b) a format of an IEEE 64 bit Extended Unique Identifier, EUI-64.

According to a further embodiment, determining the user plane address associated with said at least one network interface comprises: placing (i.e., mapping) a ServCellIndex parameter as defined by 3GPP TS 36.331 V13.1.0, 2016-03, which identifies a serving cell associated with said at least one network interface in the upper six bits of a bit sequence having 48 bits, and placing a System Architecture Evolution Temporary Mobile Subscriber Identity, S-TMSI, in the lower 40 bits of said bit sequence. This yields a unique user plane address specific to a certain network interface of the mobile transceiver which may efficiently be determined. Advantageously, the aforementioned mapping is reversible. Hence, on this basis, i.e. with a given user plane address of the above explained format, a respective control plane address may easily be derived.

According to a further embodiment, the user plane address may generally be construed by reserving predetermined bit portions (or octets or parts of octets) of a data scheme comprising a predetermined length of e.g. 48 bits (similar to a MAC address) or e.g. 64 bits, wherein a first bit portion of said data scheme may be reserved for the control plane address and a second bit portion of said data scheme, which is different from said first bit portion, may be reserved for the NIID of a respective network interface.

Embodiments further provide an apparatus for determining a user plane address for at least one mobile transceiver in a mobile communication system. The mobile communication system further comprises at least one mobile communication system infrastructure entity configured to communicate with the at least one mobile transceiver via a user plane communication channel. The mobile transceiver is controlled via a control plane communication channel and comprises one or more, preferably a plurality, of network interfaces. The apparatus comprises an input interface configured to obtain a control plane address for the at least one mobile transceiver. The apparatus further comprises a control module configured to determine, for at least one of said network interfaces, a respective user plane address associated with said at least one network interface for the at least one mobile transceiver depending on said control plane address and a network interface identifier, NIID, characterizing said at least one network interface. The apparatus further comprises an output interface configured to provide the user plane address.

According to further embodiments, the apparatus may determine several user plane addresses each of which is associated with a respective one of said at least two network interfaces.

A further embodiment is provided in form of a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: schematically depicts a mobile communication system with a multi-connectivity scenario,
- Fig. 2a: depicts a simplified flow-chart of a method according to the embodiments,
- Fig. 2b: depicts a simplified flow-chart of a further method according to the embodiments,
- Fig. 3: depicts a scheme indicating a mapping of data to a user plane address according to an embodiment, and
- Fig. 4: schematically depicts an apparatus according to an embodiment.

### Description of the embodiments

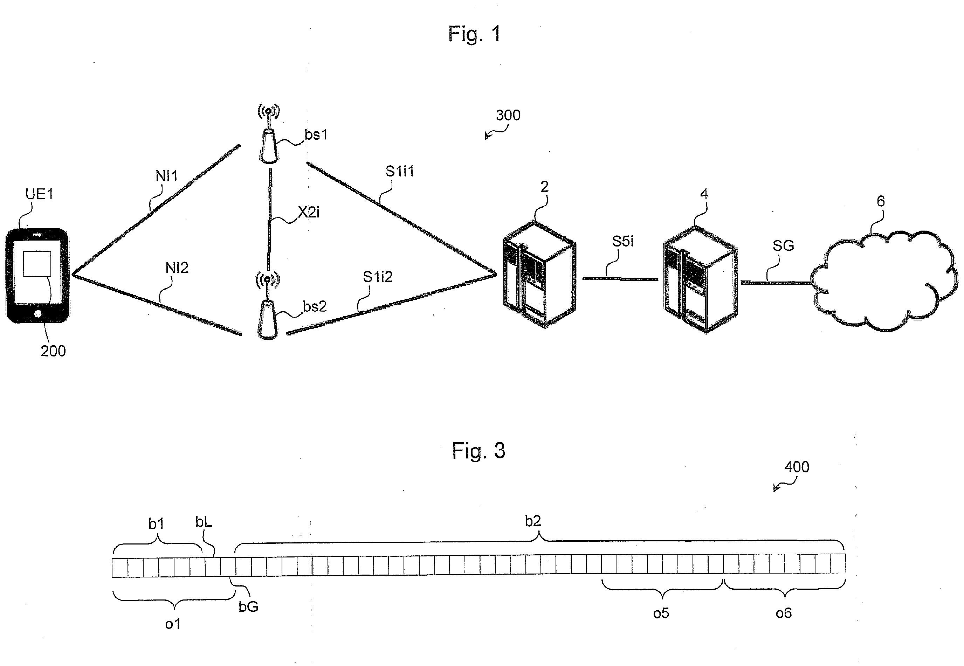

Figure 1 schematically depicts a mobile communication system 300 in which two base stations bs1, bs2 serve a terminal device UE1. The base stations bs1, bs2 may e.g. be eNodeBs as known in the art from the LTE, LTE-Advanced (LTE-A) standard or the new upcoming 5G standard and may be connected with each other by means of an X2 interface connection X2i.

Both eNodeBs bs1, bs2 are connected to a Serving Gateway (S-GW) and Mobility Management Entity (MME) 2 via S1 interface connections S1i1, S1i2, and the MME/S-GW 2 is in turn connected to a packet data network (PDN) gateway 4 by means of an interface connection S5i of the S5/S8 type. The PDN gateway 4 is connected by an interface connection SG of the SGi type to an external network 6 such as the Internet.

Presently, the terminal device UE1 has data connections with both bases stations bs1, bs2, said data connections using 3GPP-based radio technology (which may e.g. comprise Uu-interfaces known from LTE or 5G-type Uu* interfaces). This is reflected in Fig. 1 by a first connecting line NI1 indicating a first network interface and a second connecting line NI2 indicating a second network interface of the terminal device UE1. As an example, the terminal device UE1 may simultaneously be served by both base stations bs1, bs2, whereby a dual- or multi-connectivity setup is obtained.

For this purpose, the terminal device UE1 may comprise a mobile transceiver 200 integrated in the terminal device UE1 in a per se known manner.

According to further embodiments, a terminal device UE1 may comprise more than one transceiver for establishing a respective plurality of network interfaces. As an example, a UE may have a first mobile transceiver for an LTE-type network interface and a second mobile transceiver for a 5G millimeter wave network interface, and for these network interfaces, the user plane address(es) may be determined in accordance with the principle of the embodiments. In other variants, this also applies to UEs with more than two transceivers and respective network interfaces.

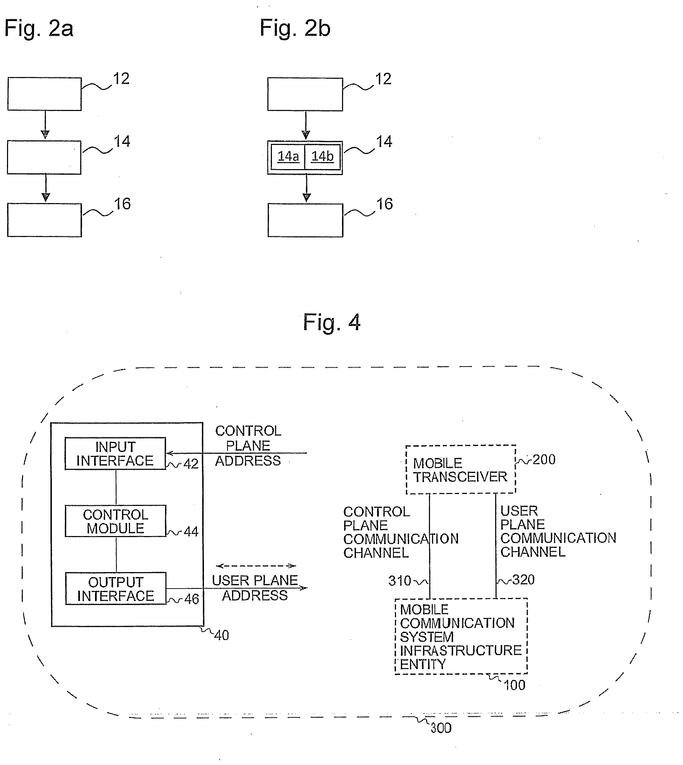

According to the principle of the embodiments, a method is presented which enables to provide user plane addresses for said mobile transceiver 200 or the terminal device UE1, respectively. Fig. 2a depicts a simplified flow-chart of a corresponding method according to the embodiments.

In a first step 12, a control plane address for the at least one mobile transceiver 200 (Fig. 1) is obtained. The step 12 of obtaining said control plane address may e.g. comprise receiving the control plane address, e.g. from at least one mobile communication system infrastructure entity such as e.g. the base station bs1, bs2, and/or comprised in a data packet or service request.

In further embodiments, the step of obtaining 12 may further comprise determining the control plane address when the at least one mobile transceiver 200 is associated with the at least one mobile communication system infrastructure entity 100 (e.g., base station bs1). For example, the control plane address might be determined by an entity or module configured to control the mobility management, e.g. a Mobility Management Entity (MME) 2, when the at least one mobile transceiver 200 joins the mobile communication system 300, e.g. associates for a first time with a base station transceiver of the mobile communication system.

The control plane address may e.g. correspond to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI, which may be assigned to the at least one mobile transceiver 200 when it associates with the network.

The method further comprises determining 14 (Fig. 2a), for at least one of said network interfaces NI1 (Fig. 1), a respective user plane address associated with said at least one network interface NI1 for the at least one mobile transceiver 200 depending on said control plane address and a network interface identifier, NIID, characterizing said at least one network interface NI1. After this, the user plane address so obtained may be provided in step 16.

In at least some embodiments, the providing 16 may comprise transmitting the user plane address to another entity of the mobile communication system 300 (Fig. 1), or providing the user plane address to the at least one mobile transceiver 200 for a transmission of user data.

In at least some embodiments, the user plane address may be used to address the at least one mobile transceiver 200 for communication via the user plane communication channel. The control plane address may be used to address the at least one mobile transceiver 200 for communication via the control plane communication channel.

According to a further preferred embodiment, said mobile transceiver 200 comprises a first network interface NI1 and a second network interface NI2, also cf. Fig. 1, and said step of determining 14 (Fig. 2b) comprises: determining 14a a first user plane address associated with said first network interface NI1 depending on said control plane address and a first NIID characterizing said first network interface NI1 (Fig. 1), determining 14b (Fig. 2b) a second user plane address associated with said second network interface NI2 (Fig. 1) depending on said control plane address and a second NIID characterizing said second network interface NI2. Thus, different, and preferably unique, user plane addresses may be provided for both network interfaces NI1, NI2 of the mobile transceiver 200.

According to an aspect, the user plane address as obtained according to the embodiments may advantageously be used as a unique identifier assigned to a respective network interface NI1, NI2 of the mobile transceiver 200 and as such may be used similar to the media access control, MAC, address known from IEEE Standards Association registry. For example, if the terminal device UE1 (Fig. 1) has one or more connections to the first base station bs1, all these connections may use the same first network interface NI1. Likewise, if the terminal device UE1 (Fig. 1) has one or more connections to the second base station bs2, all these connections may use the same second network interface NI2.

Fig. 3 schematically depicts a scheme 400 indicating a mapping of data to a user plane address according to an embodiment. The scheme comprises six octets (i.e., eight elements) of binary data, only three of which are denoted with reference signs o1, o5, o6 for the sake of clarity. In sum, said scheme 400 comprises 48 bit of data for holding a user plane address as obtained according to some embodiments.

According to an embodiment, the user plane address may be construed by reserving predetermined bit portions (or octets or parts of octets) of the depicted scheme 400, wherein a first bit portion may be reserved for the control plane address and a second bit portion of said scheme 400 may be reserved for the NIID of the respective network interface.

According to a particularly preferred embodiment, for determining 14 (Fig. 2a) a user plane address of e.g. the first network interface NI1, a System Architecture Evolution Temporary Mobile Subscriber Identity, S-TMSI, of the considered network interface NI1 is used as a control plane address. This is particularly beneficial as it has a length of 40 bits and hence fits within the 48 bits of scheme 400 leaving further bits for the NIID. Moreover, according to the particularly preferred embodiment, the NIID characterizes an identifier identifying a serving cell, particularly a primary or secondary cell, wherein said NIID preferably characterizes a ServCellIndex parameter as defined by 3GPP TS 36.331 V13.1.0, 2016-03.

The ServCellIndex is used to identify a serving cell, i.e. a Primary Cell or a Secondary Cell. A value of 0 applies for the Primary Cell, PCell, while another value applies to a corresponding Secondary Cell, SCell. In 3GPP TS 36.331 v.13.1.0, ServCellIndex is currently defined as an integer with value 0,..,31, thus having a length of 5 bits.

As an example, the ServCellIndex parameter as defined by 3GPP TS 36.331 V13.1.0, 2016-03 may be placed within said scheme 400 in the upper six bits, i.e. in the first octet o1, cf. the bracket b1. The control plane address, presently in the form of the S-TMSI, is mapped onto the lower 40 bits (5 bytes) of the scheme 400, cf. bracket b2.

Evidently, depending on the network interface NI1, NI2 considered and depending on the respective NIID value taken into consideration for providing the user plane address in accordance with the embodiments, different user plane addresses are obtained which may advantageously be used similar to the conventional MAC addresses for existing Ethernet networks. At the same time, the mapping of the instant embodiment is reversible so that based on the scheme 400, the NIID as well as the control plane address here: the S-TMSI, may be obtained.

As an example, according to a further embodiment, the user plane address may also be obtained as a function "f()" of the control plane address in combination with an NIID, cf. the following equation:
MAC_UE_NI = f(CPA, NIID), wherein MAC_UE_NI represents the user plane address, wherein CPA represents the control plane address (e.g., S-TMSI), and wherein NIID is the above explained network interface identifier.

Using the S-TMSI and the ServCellIndex explained above yields the following equation: MAC_UE_NI = f(STMSI, ServCellIndex).

The mapping of the S-TMSI and the ServCellIndex as explained above and illustrated by Fig. 3 may e.g. be effected by pseudo-code instructions as follows:
MAC_UE_NI = STMSI | (ServCellIndex << 42) | 0x020000000000, wherein "STMSI" represents a value of the S-TMSI mapped to the lower octets, "(ServCellIndex << 42)" represents a bitwise left-shift operation shifting the ServCellIndex value to its position in the first octet o1, and "|" is a bitwise OR operator used for aggregating the single terms. The expression "| 0x020000000000" is used for setting a control bit bL within the scheme 400 and will be further explained below.

According to a further embodiment, when using the ServCellIndex parameter as NIID, it is also possible to consider only some bits thereof, and not the whole binary number currently being defined with 5 bits and thus a value range of e.g. 0 to 31. In other words, a truncated or transformed version of the ServCellIndex parameter may also be used as NIID, as long as it serves to differentiate between different network interfaces NI1, NI2 of the mobile transceiver 200 (Fig. 1).

According to a preferred embodiment, the user plane address as reflected by scheme 400 may be used as source address and/or destination address in an Ethernet header of e.g. EoGRE (Ethernet over GRE (Generic Routing Encapsulation)) tunnels, which may e.g. span over the "internal" interfaces S1i1, S1i2, S5i, SG, X2. Nevertheless, it is also possible to also use such user plane addresses for transmissions over the network interfaces NI1, NI2, which currently comprise e.g. conventional 3GPP-based air interfaces.

According to an embodiment, the user plane address or scheme 400 may also comprise one or more control bits. A fist control bit bL indicates whether the user plane address defined by the data denoted by brackets b1, b2 is globally unique or locally administered. According to a preferred embodiment, the first control bit bL is set to "1" thus indicating that the user plane address defined by the data denoted by brackets b1, b2 is locally administered. As usually WiFi systems set the first control bit to "0", the value of the first control bit bL may serve to distinguish between WiFi systems and the application according to the embodiments.

According to a further embodiment, a second control bit bG may be used which indicates if the user plane address defined by the data denoted by brackets b1, b2 is a unicast address (bit value "0") or a multicast address (bit value "1"). According to another embodiment, the second control bit bG is set to "0", thus indicating unicast.

According to a further embodiment, alternatively to the ServCellIndex, a Data Radio Bearer ID (DRB ID) may be employed as network interface identifier (NIID), as the DRB ID is unique within the scope of a UE. In this context, it should be noted that for a split DRB the same entity is used both for the Master Cell Group (MCG)- and Secondary Cell Group (SCG)- parts of the configuration. Thus, such an embodiment would direct all packets from a core network towards the Master eNodeB, e.g. bs1, which may then make further processing (e.g. scheduling) and forward selected packets as needed to a Secondary eNodeB, e.g. bs2.

According to a further embodiment, the user plane address comprises, alternatively to the above explained MAC address type format of 48 bit length a format of an IEEE 64 bit Extended Unique Identifier, EUI-64. In this case, a scheme having 64 bits, similar in structure to scheme 400 of Fig. 3, may be considered, and the determination of the user plane address may be performed as explained above with reference to the MAC scheme 400.

Fig. 4 illustrates a block diagram of an embodiment of an apparatus 40 for determining a user plane address for at least one mobile transceiver 200 in a mobile communication system 300. The mobile communication system 300 further comprises at least one mobile communication system infrastructure entity 100 configured to communicate with the at least one mobile transceiver 200 via a user plane communication channel 320. The mobile transceiver 200 is controlled via a control plane communication channel 310.

The apparatus 40 comprises an input interface 42 configured to obtain a control plane address for the at least one mobile transceiver 200. An input, e.g. the input interface 42, may correspond to an interface for receiving information, which may be in digital (bit) values according to a specified code, within a module, between modules or between modules of different entities.

The apparatus 40 further comprises a control module 44 configured to determine, for at least one of the network interfaces NI1, NI2 (Fig. 1), a respective user plane address associated with said at least one network interface NI1, NI2 for the at least one mobile transceiver 200 depending on said control plane address and a network interface identifier, NIID, characterizing said at least one network interface NI1, NI2. According to a preferred embodiment, this determination may e.g. be made using a distinct transformation of the control plane address and the NIID. According to a further embodiment, the input interface 42 may also be configured to obtain information on the NIID.

In further embodiments, the control module 44 may be implemented using one or more processing units, one or more processing devices, any means for processing, such as a processor, a computer or a programmable hardware component being operable with accordingly adapted software. In other words, the described function of the control module 44 may as well be implemented in software, which is then executed on one or more programmable hardware components. Such hardware components may comprise a general purpose processor, a Digital Signal Processor (DSP), a microcontroller, etc.

The apparatus 40 further comprises an output interface 46 configured to provide the user plane address, e.g. in the form of scheme 400 as exemplarily depicted by Fig. 3. An output, e.g. the output interface 46, may correspond to an interface for transmitting information, which may be represented by digital (bit) values according to a specified code or protocol, within a module, between modules, or between modules of different entities.

Some embodiments comprise a digital control circuit installed within the apparatus 40 for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

According to an embodiment, the user plane address obtained according to the principle of the embodiments may e.g. be used as a logical IEEE MAC (media access control) address for 3GPP-based network interfaces NI1, NI2 of UEs (terminals, mobile transceivers) such as e.g. an air interface (which may e.g. be Uu-interfaces known from LTE or 5G-type Uu* interfaces) between UE and base station. As the user plane address obtained according to the principle of the embodiments is determined based on both a control plane address and a NIID, the resulting user plane address uniquely characterizes a specific (3GPP-based) network interface NI1, NI2 of the UE.

As an example, the user plane address obtained according to the principle of the embodiments may e.g. be used as a logical IEEE MAC (media access control) address for the respective 3GPP-based network interfaces NI1, NI2 (Fig. 1).

Assuming that a connectionless paradigm both in control and user plane will more and more prevail in 5G systems, efficient control plane and user plane interaction will be the key for an optimal solution. In view of this, the efficient determination of user plane addresses especially for Multi-Connectivity scenarios, wherein one mobile transceiver or UE 100 comprises several (3GPP-based) network interfaces NI1, NI2, is particularly beneficial. As an example, an elegant interaction between control plane (paging) and user plane (Ethernet Packet destined to a terminal) can be realized by employing the principle according to the embodiments. Further fields of application of the principle according to the embodiments are Improved Mobility Support For Connectionless Bearer Service In 5G and moving tracking area management for terminals. Also, user-specific control channel techniques may benefit from the principle according to the embodiments.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. Method, performed by an apparatus, for providing a user plane address for a mobile transceiver (200) in a mobile communication system (300) further comprising at least one mobile communication system infrastructure entity (100) communicating with the mobile transceiver (200) via a user plane communication channel (320), the mobile transceiver (200) being controlled via a control plane communication channel (310) and comprising a first network interface (NI1) and a second network interface (NI2), the method comprising:
obtaining (12) a control plane address for the mobile transceiver (200);
determining (14a) a first user plane address associated with said first network interface (NI1) of the mobile transceiver (200) reversibly mapped to said control plane address and a first network interface identifier characterizing said first network interface (NI1);
determining (14b) a second user plane address associated with said second network interface (NI2) of the mobile transceiver (200) reversibly mapped to said control plane address and a second network interface identifier characterizing said second network interface (NI2);
providing (16) said first and second user plane address;
wherein the network interface identifier is an identifier identifying a primary or secondary cell, said network interface identifier being a ServCellIndex parameter, and
wherein the control plane address corresponds to at least one element of the group of a Temporary Mobile Subscriber Identity, a System Architecture Evolution Temporary Mobile Subscriber Identity, International Mobile Subscriber Identity, and Globally Unique Temporary user equipment Identity and
wherein the providing said first and second user plane address comprises:
transmitting the first and second user plane address to the mobile transceiver (200); and
using the first and second user plane address for forwarding packets to its destination.

2. The method according to claim 1, wherein the determining (14; 14a, 14b) is based on a reversible transformation of the control plane address and the network interface identifier.

3. The method according to claim 1, wherein the determining (14) is based on a bijective transformation of the control plane address and the network interface identifier.

4. The method according to claim 1, wherein the determining (14) is based on a local transformation of the control plane address and the network interface identifier.

5. The method of claim 1, wherein the obtaining (12) further comprises determining the control plane address when the mobile transceiver (200) is associated with the at least one mobile communication system infrastructure entity (100).

6. The method according to one of the preceding claims, wherein the at least one mobile communication system entity (100) corresponds to at least one element of the group of base station transceiver, serving gateway, packet gateway, mobility management entity and radio access network user plane anchor.

7. Method according to one of the preceding claims, wherein the user plane address comprises a) a media access control address, format or b) a format of an IEEE 64 bit Extended Unique Identifier.

8. Method according to one of the preceding claims, wherein determining the user plane address associated with said at least one network interface (NI1) comprises: placing a ServCellIndex parameter, which identifies a serving cell associated with said at least one network interface (NI1), in the upper six bits of a bit sequence having 48 bits of the media access control address format, and placing a System Architecture Evolution Temporary Mobile Subscriber Identity in the lower 40 bits of said bit sequence.

9. Apparatus (40) for determining a user plane address for a transceiver (200) in a mobile communication system (300), the apparatus (40) comprising means (42, 44, 46) being configured to perform any of the methods of claims 1 to 8.

10. A computer program product comprising a computer readable medium having computer readable program code embodied therein, the computer readable program code being configured to implement any of the methods of claims 1 to 8, when being loaded on a computer, a processor, or a programmable hardware component.

11. A mobile communication system (300) comprising an apparatus (40) according to claim 9 and a mobile transceiver (200), wherein the apparatus (40) is configured to provide said determined first and second user plane addresses to said mobile transceiver (200) for transmission of user data, and wherein said mobile transceiver (200) is configured to transmit user data using the provided user plane addresses.

## Patentansprüche

1. Verfahren, das von einer Vorrichtung zum Bereitstellen einer Benutzerebenenadresse für einen mobilen Sendeempfänger (200) in einem mobilen Kommunikationssystem (300) durchgeführt wird, das ferner mindestens eine mobile Kommunikationssysteminfrastrukturentität (100) umfasst, die via einen Benutzerebenenkommunikationskanal (320) mit dem mobilen Sendeempfänger (200) kommuniziert, wobei der mobile Sendeempfänger (200) via einen Steuerebenenkommunikationskanal (310) gesteuert wird und eine erste Netzwerkschnittstelle (NI1) und eine zweite Netzwerkschnittstelle (NI2) umfasst, wobei das Verfahren Folgendes umfasst:
Erhalten (12) einer Steuerebenenadresse für den mobilen Sendeempfänger (200);
Bestimmen (14a) einer ersten Benutzerebenenadresse, die mit der ersten Netzwerkschnittstelle (NI1) des mobilen Sendeempfängers (200) verknüpft und der Steuerebenenadresse und einer ersten Netzwerkschnittstellenkennung, die die erste Netzwerkschnittstelle (NI1) charakterisiert, umkehrbar zugeordnet ist;
Bestimmen (14b) einer zweiten Benutzerebenenadresse, die mit der zweiten Netzwerkschnittstelle (NI2) des mobilen Sendeempfängers (200) verknüpft und der Steuerebenenadresse und einer zweiten Netzwerkschnittstellenkennung, die die zweite Netzwerkschnittstelle (NI2) charakterisiert, umkehrbar zugeordnet ist;
Bereitstellen (16) der ersten und der zweiten Benutzerebenenadresse;
wobei die Netzwerkschnittstellenkennung eine Kennung ist, die eine primäre oder eine sekundäre Zelle identifiziert, wobei die Netzwerkschnittstellenkennung ein Parameter ServCellIndex ist, und
wobei die Steuerebenenadresse mindestens einem Element der Gruppe aus temporärer Mobilteilnehmeridentität, temporärer Systemarchitekturentwicklungsmobilteilnehmeridentität, internationaler Mobilteilnehmeridentität und globaler eindeutiger temporärer Teilnehmereinrichtungsidentität entspricht und
wobei das Bereitstellen der ersten und der zweiten Benutzerebenenadresse Folgendes umfasst:
Übertragen der ersten und der zweiten Benutzerebenenadresse zum mobilen Sendeempfänger (200); und
Verwenden der ersten und der zweiten Benutzerebenenadresse zum Weiterleiten von Paketen zu ihrem Ziel.

2. Verfahren nach Anspruch 1, wobei das Bestimmen (14; 14a, 14b) auf einer umkehrbaren Transformation der Steuerebenenadresse und der Netzwerkschnittstellenkennung basiert.

3. Verfahren nach Anspruch 1, wobei das Bestimmen (14) auf einer bijektiven Transformation der Steuerebenenadresse und der Netzwerkschnittstellenkennung basiert.

4. Verfahren nach Anspruch 1, wobei das Bestimmen (14) auf einer lokalen Transformation der Steuerebenenadresse und der Netzwerkschnittstellenkennung basiert.

5. Verfahren nach Anspruch 1, wobei das Erhalten (12) ferner das Bestimmen der Steuerebenenadresse, wenn der mobile Sendeempfänger (200) mit der mindestens einen mobilen Kommunikationssysteminfrastrukturentität (100) verknüpft ist, umfasst.

6. Verfahren nach einem der vorhergehenden Ansprüche, wobei die mindestens eine mobile Kommunikationssysteminfrastrukturentität (100) mindestens einem Element der Gruppe aus Basisstationssendeempfänger, bedienendem Gateway, Paketgateway, Mobilitätsverwaltungsentität und Funkzugangsnetzwerkbenutzerebenenanker entspricht.

7. Verfahren nach einem der vorhergehenden Ansprüche, wobei die Benutzerebenenadresse a) ein Format einer Medienzugriffssteuerungsadresse oder b) ein Format einer erweiterten eindeutigen 64-Bit-Kennung gemäß IEEE umfasst.

8. Verfahren nach einem der vorhergehenden Ansprüche, wobei das Bestimmen der Benutzerebenenadresse, die mit der mindestens einen Netzwerkschnittstelle (NI1) verknüpft ist, Folgendes umfasst: Platzieren eines Parameters ServCellIndex, der eine bedienende Zelle identifiziert, die mit der mindestens einen Netzwerkschnittstelle (NI1) verknüpft ist, in den oberen sechs Bits einer Bitsequenz mit 48 Bits des Medienzugriffssteuerungsadressformats und Platzieren einer temporären mobilen Systemarchitekturentwicklungsmobilteilnehmeridentität in den unteren 40 Bits der Bitsequenz.

9. Vorrichtung (40) zum Bestimmen einer Benutzerebenenadresse für einen Sendeempfänger (200) in einem mobilen Kommunikationssystem (300), wobei die Vorrichtung (40) Mittel (42, 44, 46) umfasst, die dazu ausgelegt sind, eines der Verfahren nach Anspruch 1 bis 8 durchzuführen.

10. Computerprogrammprodukt, das ein computerlesbares Medium umfasst, auf dem sich ein computerlesbarer Programmcode befindet, wobei der computerlesbare Programmcode dazu ausgelegt ist, eines der Verfahren nach einem der Ansprüche 1 bis 8 durchzuführen, wenn et in einen Computer, einen Prozessor oder eine programmierbare Hardwarekomponente geladen wird.

11. Mobiles Kommunikationssystem (300), das eine Vorrichtung (40) nach Anspruch 9 und einen mobilen Sendeempfänger (200) umfasst, wobei die Vorrichtung (40) dazu ausgelegt ist, dem mobilen Sendeempfänger (200) zur Übertragung von Benutzerdaten die bestimmte erste und zweite Benutzerebenenadresse bereitzustellen, und wobei der mobile Sendeempfänger (200) dazu ausgelegt ist, unter Verwendung der bereitgestellten Benutzerebenenadressen Benutzerdaten zu übertragen.

## Revendications

1. Procédé réalisé par un appareil, pour fournir une adresse de plan d'utilisateur pour un émetteur-récepteur mobile (200) dans un système de communication mobile (300) comprenant en outre au moins une entité d'infrastructure de système de communication mobile (100) communiquant avec l'émetteur-récepteur mobile (200) via un canal de communication de plan d'utilisateur (320), l'émetteur-récepteur mobile (200) étant commandé via un canal de communication de plan de commande (310) et comprenant une première interface de réseau (NI1) et une deuxième interface de réseau (N12), le procédé comprenant :
l'obtention (12) d'une adresse de plan de commande pour l'émetteur-récepteur mobile (200) ;
la détermination (14a) d'une première adresse de plan d'utilisateur associée à ladite première interface de réseau (NI1) de l'émetteur-récepteur mobile (200) mappée de manière réversible à ladite adresse de plan de commande, et d'un premier identifiant d'interface de réseau caractérisant ladite première interface de réseau (NI1) ;
la détermination (14b) d'une deuxième adresse de plan d'utilisateur associée à ladite deuxième interface de réseau (N12) de l'émetteur-récepteur mobile (200) mappée de manière réversible à ladite adresse de plan de commande, et d'un deuxième identifiant d'interface de réseau caractérisant ladite deuxième interface de réseau (N12) ;
la fourniture (16) desdites première et deuxième adresses de plan d'utilisateur ;
dans lequel l'identifiant d'interface de réseau est un identifiant qui identifie une cellule primaire ou secondaire, ledit identifiant d'interface de réseau étant un paramètre ServCellIndex, et
dans lequel l'adresse de plan de commande correspond à au moins un élément du groupe constitué d'une identité d'abonné mobile temporaire, d'une identité d'abonné mobile temporaire d'évolution d'architecture de système, d'une identité d'abonné mobile internationale, et d'une identité d'équipement d'utilisateur temporaire unique au niveau mondial et
dans lequel la fourniture desdites première et deuxième adresses de plan d'utilisateur comprend :
la transmission des première et deuxième adresses de plan d'utilisateur à l'émetteur-récepteur mobile (200) ; et
l'utilisation des première et deuxième adresses de plan d'utilisateur pour faire suivre des paquets à leur destination.

2. Procédé selon la revendication 1, dans lequel la détermination (14 ; 14a, 14b) est basée sur une transformation réversible de l'adresse de plan de commande et de l'identifiant d'interface de réseau.

3. Procédé selon la revendication 1, dans lequel la détermination (14) est basée sur une transformation bijective de l'adresse de plan de commande et de l'identifiant d'interface de réseau.

4. Procédé selon la revendication 1, dans lequel la détermination (14) est basée sur une transformation locale de l'adresse de plan de commande et de l'identifiant d'interface de réseau.

5. Procédé selon la revendication 1, dans lequel l'obtention (12) comprend en outre la détermination de l'adresse de plan de commande lorsque l'émetteur-récepteur mobile (200) est associé à la au moins une entité d'infrastructure de système de communication mobile (100).

6. Procédé selon l'une des revendications précédentes, dans lequel la au moins une entité d'infrastructure de système de communication mobile (100) correspond à au moins un élément du groupe constitué d'un émetteur-récepteur de station de base, d'une passerelle de desserte, d'une passerelle de paquet, d'une entité de gestion de la mobilité et d'un ancrage de plan d'utilisateur de réseau d'accès radio.

7. Procédé selon l'une des revendications précédentes, dans lequel l'adresse de plan d'utilisateur comprend a) un format d'adresse de commande d'accès au support, ou b) un format d'un identifiant unique étendu IEEE 64 bits.

8. Procédé selon l'une des revendications précédentes, dans lequel la détermination de l'adresse de plan d'utilisateur associée à ladite au moins une interface de réseau (NI1) comprend : le placement d'un paramètre ServCellIndex, qui identifie une cellule de desserte associée à ladite au moins une interface de réseau (NI1), dans les six bits supérieurs d'une séquence de bits ayant 48 bits du format d'adresse de commande d'accès au support, et le placement d'une identité d'abonné mobile temporaire d'évolution d'architecture de système dans les 40 bits inférieurs de ladite séquence de bits.

9. Appareil (40) pour la détermination d'une adresse de plan d'utilisateur pour un émetteur-récepteur (200) dans un système de communication mobile (300), l'appareil (40) comprenant des moyens (42, 44, 46) qui sont configurés pour réaliser l'un quelconque des procédés selon les revendications 1 à 8.

10. Produit de programme informatique comprenant un support lisible par ordinateur dans lequel est incorporé un code de programme lisible par ordinateur, le code de programme lisible par ordinateur étant configuré pour mettre en œuvre l'un quelconque des procédés selon les revendications 1 à 8, lorsqu'il est chargé sur un ordinateur, un processeur, ou un composant matériel programmable.

11. Système de communication mobile (300) comprenant un appareil (40) selon la revendication 9 et un émetteur-récepteur mobile (200), dans lequel l'appareil (40) est configuré pour fournir lesdites première et deuxième adresses de plan d'utilisateur déterminées audit émetteur-récepteur mobile (200) pour la transmission de données d'utilisateur, et dans lequel ledit émetteur-récepteur mobile (200) est configuré pour transmettre des données d'utilisateur en utilisant les adresse de plan d'utilisateur fournies.
